(19) **Europäisches Patentamt**

**European Patent Office**

**Office européen des brevets**

(11) **EP 0 610 787 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(51) Int. Cl.⁷: **C08G 59/50**, C08L 63/00, C09D 163/00, C09J 163/00, C09D 5/34, C04B 24/28, C04B 41/48

(21) Anmeldenummer: **94101519.0**

(22) Anmeldetag: **02.02.1994**

(54) **Härtungsmittel für wässrige Epoxidharz-Dispersionen**

Curing agents for aqueous epoxy resin dispersions

Agents de durcissement pour des dispersions aqueuses de résines époxydes

(84) Benannte Vertragsstaaten:
**BE CH DE ES FR GB GR IT LI NL SE**

(30) Priorität: **08.02.1993 DE 4300562**

(43) Veröffentlichungstag der Anmeldung:
**17.08.1994 Patentblatt 1994/33**

(73) Patentinhaber:
**HOECHST AKTIENGESELLSCHAFT**
**65926 Frankfurt am Main (DE)**

(72) Erfinder:
• **Dreieschhoff, Dieter**
  **D-65203 Wiesbaden (DE)**
• **Dr. Geisler, Jörg-Peter**
  **D-55218 Ingelheim (DE)**
• **Godau, Claus**
  **D-65399 Kiedrich (DE)**
• **Dr. Hönel, Michael**
  **D-65189 Wiesbaden (DE)**
• **Stengel-Rutkowski, Bernhard**
  **D-65207 Wiesbaden (DE)**

(74) Vertreter:
**Zounek, Nikolai, Dipl.-Ing.**
**Patentanwaltskanzlei Zounek,**
**Industriepark Kalle Albert,**
**Gebäude H287**
**65174 Wiesbaden (DE)**

(56) Entgegenhaltungen:
EP-A- 0 000 605        EP-A- 0 559 033
US-A- 4 152 285        US-A- 4 575 523
US-A- 4 608 405

**Beschreibung**

Bei Raumtemperatur härtende Bindemittelsysteme auf Basis von flüssigen oder festen Epoxidharzen und geeigneten, meist (cyclo)aliphatischen Aminhärtern haben sich seit Jahrzehnten aufgrund ihrer guten Haftung auf den unterschiedlichsten Untergründen sowie der hervorragenden mechanischen Eigenschaften und Chemikalienbeständigkeiten in der Praxis bewährt. Das typische Härtungsprinzip beruht dabei bekanntermaßen auf der Polyaddition von polyfunktionellen Aminen mit primären und/oder sekundären Aminogruppen an die Epoxidgruppen, die zu hochvernetzten Duromeren führt.

Durch die sich ständig verschärtenden behördlichen Auflagen, Lösemittel sowie andere leichtflüchtige Schadstoffe in Beschichtungsmaterialien zu reduzieren, gewinnen wasserverdünnbare Epoxid/Amin-Bindemittelsysteme als Alternative zunehmend an Bedeutung und sind Gegenstand intensiver Forschungs- und Entwicklungsbemühungen.

Hierbei ist hinsichtlich der Härtungsmittel zu beachten, daß Polyamine im allgemeinen gut wasserlöslich sind, also leicht wäßrige Lösungen bilden, aber keine stabilen Emulsionen in Wasser ergeben und daher zum Beispiel Epoxidemulsionen unter Phasentrennung brechen. Zur Herstellung aminischer Emulsionen müssen Amine daher hydrophobiert werden, d.h. geeigneten chemischen Umsetzungen unterworfen werden, um weniger wasserlösliche Reaktionsprodukte zu erhalten.

Dies kann durch Additions- oder Kondensationsreaktionen sowie durch Substitution erfolgen. Als Aminhärter für Epoxidharzemulsionen/-dispersionen sind daher zum Beispiel modifizierte Epoxid-/Amin-Addukte bekannt.

Aus der EP-A- 0 288 975 sind Addukte von Monoglycidylethern oder -estern und bestimmten Diaminen bekannt, die sich in Kombination mit üblichen Härtungsbeschleunigern und Verträglichkeitsmitteln zur Härtung von Epoxidharzen, insbesondere bei tiefen Temperaturen, eignen. Diese Epoxidharzhärter sind jedoch nicht wasserverdünnbar.

In der EP-A- 0 175 589 sind auf Epoxynovolaken basierende Aminhärter beschrieben, die durch Umsetzung eines Epoxynovolaks mit einem primäre Aminogruppen enthaltenden Polyamin im Überschuß sowie anschließende Umsetzung aller verbliebenen primären Aminogruppen mit Monoepoxidverbindungen hergestellt werden. Diese aminischen Härtungsmittel, die nicht wasserverdünnbar sind, eignen sich nur zur Verwendung in Kombination mit konventionellen, lösemittelhaltigen Epoxidharzen.

In den US-Patentschriften 4 246 148 und 4 608 405 werden wasserverdünnbare Epoxidharzhärter für die Härtung bei Raumtemperatur beschrieben, die folgendermaßen hergestellt werden: Zunächst wird aus einem aromatischen Diglycidylether, ggf. einem Diglycidylether eines aliphatischen Diols und einem aromatischen Polyol in Gegenwart eines geeigneten Katalysators ein lineares Diepoxid aufgebaut, dessen Epoxidgruppen anschließend vollständig mit einem Polyamin umgesetzt werden. Alle verbleibenden primären Aminogruppen dieses Epoxy/Amin-Adduktes werden danach mit einem Monoepoxid oder einer Monocarbonsäure zur Reaktion gebracht, um die Gebrauchsdauer der Härter zu verlängern. Diese Epoxidharzhärter haben jedoch mehrere gravierende Nachteile:

-    Zur Herstellung der Härter müssen vorzugsweise organische Lösungsmittel verwendet werden, die im Endprodukt verbleiben.

-    Die Wasserverdünnbarkeit der Härter wird durch (Teil)Neutralisation der Aminogruppen mit organischen Monocarbonsäuren erzielt, die erst bei der Härtung aus dem Film entweichen. Die wasserverdünnbaren Härter haben demnach ionische Struktur und sind deshalb zum Beispiel schlecht mit nichtionisch stabilisierten wäßrigen Epoxidharzen kompatibel.

-    Die in den zitierten US-Patentschriften beschriebenen Härter weisen von ihrer Synthese her nur sekundäre Aminogruppen auf. Gegenüber Härtern, die zusätzlich auch primäre Aminogruppen enthalten, wird dadurch die Vernetzungsdichte erniedrigt, was nachteilige Auswirkungen auf die technologischen Eigenschaften der Epoxidharzbeschichtungen hat.

Demgegenüber sind in EP-A- 0 000 605 Härtungsmittel für wäßrige Epoxidharz-Dispersionen offenbart, die erhalten werden, indem man A) ein Addukt aus a1) mindestens einer Polyepoxidverbindung und a2) mindestens einem Polyalkylenpolyetherpolyol mit einem mittleren Molekulargewicht von 200 bis 10000 durch Umsetzung im Äquivalentverhältnis von a1) : a2) = 2 : (0,1 bis 1,5) mit B) einem Polyamin oder Polyamingemisch in 2- bis 10-fachem Überschuß der N-H-Gruppen, bezogen auf die reaktiven Epoxidgruppen, umsetzt. Hierbei sind an die reaktiven Gruppen des Polyamins B) noch C) noch zur Addition befähigte ungesättigte Verbindungen wie (Meth-)Acrylsäure, deren Ester oder Amide oder Acrylnitril addiert.

Diese lösemittelfreien, nichtionischen Härtungsmittel für wäßrige Epoxidharze haben hervorragende technologische Eigenschaften, jedoch sind wäßrige verdünnte Lösungen dieser Aminhärter bei erhöhten Temperaturen, z.

B. bei über 40 °C, instabil und separieren in zwei Phasen, was die Verarbeitung beeinträchtigt.

Außerdem können die an die reaktiven Gruppen des Polyamins addierten ungesättigten Verbindungen, insbesondere bei höheren Temperaturen, im Rahmen einer Retro-Michael-Addition als solche freigesetzt werden, was, da die eingesetzten ungesättigten Verbindungen toxikologisch als nicht unbedenklich einzustufen sind, Applikationen bei höheren Temperaturen stark einschränkt. Ohne die Umsetzung mit den ungesättigten Verbindungen ist allerdings das sog. "pot-life" der mit den Härtern und wäßrigen, polyfunktionellen Epoxidverbindungen hergestellten Beschichtungssysteme zu gering.

Es bestand daher das Bedürfnis, diese Nachteile der in EP-A-0 000 605 beschriebenen Härter bei Erhalt oder Verbesserung der sonstigen technologischen Eigenschaften zu eliminieren.

Diese Aufgabe wird erfindungsgemäß durch wasserverdünnbare Härtungsmittel für wäßrige Epoxidharz-Dispersionen gelöst, welche erhalten werden durch Umsetzung eines Adduktes (A) aus mindestens einem Polyepoxid ($A_1$) und mindestens einem Polyalkylenpolyetherpolyol ($A_2$), wobei das Addukt (A) gegebenenfalls mit einem sekundären Amin ($A_3$) modifiziert sein kann, mit

I. einem Umsetzungsprodukt aus einem Amin (B) und einem Epoxid (C) wobei die Menge an Amin (B) so gewählt ist, daß die am Stickstoff befindlichen H-Atome in einem 2- bis 10-fachen Überschuß, bezogen auf die Epoxidgruppen in (A), vorhanden sind.

Bei den 1,2-Epoxidverbindungen entsprechend ($A_1$) handelt es sich um Polyepoxide mit im Mittel mehr als einer, vorzugsweise mindestens zwei Epoxidgruppen pro Molekül. Diese Epoxidverbindungen können dabei sowohl gesättigt als auch ungesättigt sowie aliphatisch, cycloaliclisch, aromatisch und/oder heterocyclisch sein und auch Hydroxylgruppen und/oder funktionelle Gruppen enthalten, die unter den Mischungs oder Reaktionsbedingungen keine störenden Nebenreaktionen verursachen, beispielsweise Alkyl- oder Arylsubstituenten, Ethergruppierungen und ähnliche. Geeignet sind zum Beispiel die Epoxide mehrfach ungesättigter Kohlenwasserstoffe (z. B. Vinylcyclohexen, Dicyclopentadien, Cyclohexadien, Cyclododecadien, Isopren, Butadien, 1,5-Hexadien, Polybutadien, Divinylbenzole udgl.), Oligomere des Epichlorhydrins u. ä., S- und N-haltige Epoxide (N,N-Diglycidylanilin, N,N'-Dimethyldiglycidyl-4,4-diaminodiphenyl-methan) sowie Epoxide, welche nach üblichen Verfahren aus mehrfach ungesättigten Carbonsäuren oder einfach ungesättigten Carbonsäureestern ungesättigter Alkohole hergestellt worden sind, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind sowie Polyglycidylester von Polycarbonsäuren, die man durch Umsetzung von Epichlorhydrin oder ähnlichen Epoxiverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält (z. B. Adipinsäurediglycidylester, Phthalsäurediglycidylester und Hexahydrophthalsäurediglycidylester).

Vorzugsweise handelt es sich bei den Epoxidverbindungen ($A_1$) um Polyglycidylether auf Basis von mehrwertigen, vorzugsweise zweiwertigen Alkoholen, Phenolen, Hydrierungsprodukten dieser Phenole und/oder von Phenolharzen (zum Beispiel Umsetzungsprodukten von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 90 und 500 g/Eq., insbesondere zwischen 100 und 350 g/Eq.

Als mehrwertige Phenole sind beispielsweise zu nennen: Resorcin, Hydrochinon, 2,2-bis-(4-hydroxyphenyl)-propan (Bisphenol A), Isomerengemische des Dihydroxydiphenylmethans (Bisphenol F), Tetrabrombisphenol A, 4,4'-Dihydroxy-diphenylcyclohexan, 4,4'-Dihydroxy-3,3'-dimethyldiphenylpropan,4,4'-Dihydroxy-diphenyl, 4,4'-Dihydroxybenzophenol, Bis-(4-hydroxyphenyl)-1,1-ethan, 2,2-Bis[4-(2-Hydroxypropoxy)-phenyl]-propan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)ether, 2,2-Bis-(4-hydroxy-3-methylphenyl)propan, Bis-(4-hydroxyphenyl)-phenylmethan, Bis-(4-hydroxyphenyl)diphenylmethan, 1,1-Bis-(4-hydroxyphenyl)-cyclohexan, Bis-(4-hydroxyphenyl)-sulfon u. a. sowie die Halogenierungsprodukte der vorstehend genannten Verbindungen. Bisphenol A und Bisphenol F sind dabei besonders bevorzugt.

Als Beispiele für mehrwertige Alkohole seien die Hydrierungsprodukte der vorstehend genannten mehrwertigen Phenole sowie Ethylenglykol, Diethylenglykol, Triethylenglykol, Polyethylenglykole (n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentanglykol, Cyclohexandimethanol, Trimethylolethan, Trimethylolpropan und Umsetzungsprodukte von aliphatischen oder aromatischen Polyolen, beispielsweise Trimethylolpropan oder Bisphenol A, mit Ethylenoxid und/oder Pro pylenoxid, genannt. Eine ausführliche Aufzählung geeigneter Epoxidverbindungen findet sich in dem Handbuch "Epoxid-verbindungen und Epoxidharze" von A. M. Paquin, Springer Verlag, Berlin 1958, Kapitel IV und in Lee, Neville, "Handbook of Epoxy Resins", Mc. Graw-Hill Book Co., 1967, Chapter 2.

Die vorstehenden polyfunktionellen Epoxiverbindungen, dieser Ausdruck schließt auch den Begriff Epoxid-

harz ein, können einzeln oder im Gemisch, gegebenenfalls in Gegenwart von Lösungsmitteln nach dem vorliegenden Verfahren umgesetzt werden.

Bevorzugt werden als Epoxidverbindungen gemäß $(A_1)$ die Diglycidylether von Bisphenol A, Bisphenol F, Cyclohexandimethanol und des Umsetzungsproduktes von Bisphenol A mit Propylenoxid verwendet.

Geeignete Polyalkylenpolyetherpolyole $(A_2)$, die zur Herstellung der erfindungsgemäßen Härtungsmittel herangezogen werden können, sind zum Beispiel die Anlagerungsprodukte von Alkylenoxiden an mehrwertige Alkohole oder andere H-acide Verbindungen, z. B. Amine mit einer oder mehreren primären oder sekundären Aminogruppen. Geeignete Alkylenoxide sind zum Beispiel Ethylenoxid, Propylenoxid, Butylenoxid und Amylenoxid. Als mehrwertige Alkohole sind aliphatische Alkohole einzeln oder im Gemisch geeignet, zum Beispiel Ethylenglykol, 1,3-Propylenglykol, 1,2-Propylenglykol, 1,4-Butylenglykol, 1,3-Butylenglykol, 1,2-Butylenglykol, 1,5-Pentandiol, 1,4-Pentandiol, 1,3-Pentandiol, 1,6-Hexandiol, 1,7-Heptandiol, Glycerin, 1,1,1-Trimethylolpropan 1,1,1-Trimethylolethan, Hexan-1,2,6-triol, $\alpha$-Methylglycosid, Pentaerythrit und Sorbit.

Die Alkohole oder andere, als Startmoleküle geeignete protonenhaltige Verbindungen, können mit einem oder mehreren Alkylenoxid(en) einzeln oder im Gemisch umgesetzt werden, so daß bei Verwendung mehrerer Alkylenoxide statistische Copolymere oder Blockcopolymere resultieren können. Die Polyalkylenpolyetherpolyole weisen primäre und/oder sekundäre Hydroxylgruppen, vorzugsweise primäre Hydroxylgruppen, auf und sind vorzugsweise Polyether, die aus Alkylenoxiden mit 2 bis 6 Kohlenstoffatomen hergestellt werden, zum Beispiel Polyethylenetherglykole, Polypropylenetherglykole und Polybutylenetherglykole. Die Polyalkylenpolyetherpolyole können nach jedem bekannten Verfahren hergestellt werden. Die mittlere Molmasse der Komponente $(A_2)$ beträgt vorzugsweise 200 bis 10000, insbesondere 600 bis 4000.

Die epoxidfunktionellen Addukte (A) aus den Epoxidverbindungen $(A_1)$ und den Polyalkylenpolyolen $(A_2)$ werden vor ihrer Umsetzung mit den Umsetzungsprodukten aus (B) und (C), vorzugsweise noch mit sekundären Aminen $(A_3)$, umgesetzt. Das sekundäre Amin wirkt als Kettenstopper in der anschließenden Reaktion (A) mit (B) bzw. (B/C) und ermöglicht so die Kontrolle der Viskosität der erfindungsgemäßen Härtungsmittel.

Geeignete sekundäre Amine werden in einer Menge von bis zu 0,5 Äquivalenten, vorzugsweise 0,02 - 0,25 Äquivalenten, bezogen auf die in dem Addukt aus $(A_1)$ und $(A_2)$ enthaltenen Epoxidgruppen eingesetzt. Es handelt sich dabei um (cyclo)aliphatische oder araliphatische, sekundäre Amine, wie zum Beispiel Diethylamin, Di-n-pro pylamin, Diisopropylamin, Dibutylamin, Piperidin, Pyrrolidin, N-Methyl-benzylamin, Diethanolamin u.ä., die einzeln oder im Gemisch eingesetzt werden können.

Gemäß der Erfindung können aliphatische, cycloaliphatische, araliphatische und/oder heterocyclische Amine allein oder im Gemisch als Komponente (B) eingesetzt werden. Vorzugsweise enthalten diese Amine mehr als eine primäre und/oder sekundäre Aminogruppe. Geeignete Amine (B) können noch weitere, funktionelle Gruppen, z. B. tertiäre Aminogruppen, Hydroxylgruppen, Ethergruppen oder Doppelbindungen, enthalten. Als Beispiele seien (cyclo)aliphatische Polyamine, wie z. B. Ethylendiamin, 1,2-Propylendiamin, 1,3-Propylendiamin, 1,4-Butandiamin, 1,8-Octandiamin, 1,3-Diaminopentan, Hexamethylendiamin, 2-Methyl-pentamethylendiamin, Neopentandiamin, Cyclohexandiamin, 2,2,4-(2,4,4-)Trimethylhexamethylendiamin, TCD-Diamin (Fa. Hoechst AG), Isophorondiamin, Bis-(aminomethyl)cyclohexan, Bis-(4-Aminocyclohexyl)-methan, Diethylentriamin, Triethylentetramin, Tetraethylenpentamin, Dipropylentriamin, Bis-hexamethylendiamin, Aminoethylethanolamin, N,N-Dimethylaminodipropylentriamin, Talgfettpropylendiamin, Laurylpropylendiamin, Polyoxyalkylenpolyamine, wie z. B. die von der Firma Texaco Chemical Co. unter dem Markennamen "Jeffamine" vertriebenen Polyamine (z. B. Jeffamine(R) D 230, D 2000, T 403), Dioxadecandiamin, Trioxatridecandiamin, araliphatische Amine, z. B. 1,2-, 1,3-(meta-Xylylendiamin) und 1,4-Bis(Aminomethyl)benzol und heterocyclische Polyamine, wie z. B. Aminoethylpiperazin und Bis-(aminopropyl)piperazin genannt. Vorzugsweise werden als Komponente (B) Isophorondiamin, TCD-Diamin, meta-Xylylendiamin und Cyclohexandiamin eingesetzt. Die Polyamine (B) werden vorzugsweise in einer solchen Menge verwendet, daß die N-H-Gruppen in 2-bis 10-fachem, vorzugsweise 4 - 9fachem Überschuß, bezogen auf die Epoxidgruppen in (A), vorhanden sind.

Wesentlicher Bestandteil der vorliegenden Erfindung ist, daß die Aminogruppen der Polyamine (B) vor deren Umsetzung mit dem Addukt (A) teilweise mit weiteren Epoxidverbindungen (C) modifiziert werden. Diese Modifizierung bewirkt eine längere Gebrauchsdauer der mit den erfindungsgemäßen Härtungsmitteln formulierten Bindemittelsysteme.

Bei der Komponente (C) handelt es sich um (cyclo)aliphatische Verbindungen mit einer oder mehreren Epoxidgruppen, z. B. um (Poly)Glycidylether von (cyclo)aliphatischen Alkoholen oder Polyolen, (Poly)Glycidylester von (cyclo)aliphatischen (Poly)carbonsäuren oder Oxide von Alkenen und/oder um aromatische Monoepoxidverbindungen, z. B. um Glycidylether von (substituierten) Phenolen oder um Oxide von aromatisch substituierten Alkenen. Geeignete Verbindungen (C) können noch zusätzlich funktionelle Gruppen aufweisen und können allein oder im Gemisch eingesetzt werden. Als Beispiele seien genannt: Butylglycidylether, Ethylhexylglycidylether, Butandioldiglycidylether, Hexandioldiglycidylether, Neopentandioldiglycidylether, Cyclohexandimethanoldiglycidylether, Polyoxyethylendiglycidylether (n = 2 - 15), Polyoxypropylendiglycidylether (n = 2 - 12), Glycidylether von höheren, isomeren Alkoholen (z. B. die Produkte Grilonit$^®$ RV 1814 der Firma Ems Chemie; Eurepox$^®$ RV-E und RV-G der Firma Witco), der Glycidylester der Versaticsäure (Cardura® E der Firma Shell Chemie), Oxide von Alkyl- und Arylalkenen wie zum Beispiel (Cyclo)Hexenoxid, Octenoxid, Phenylglycidylether, p-tert.-Butylphenylglycidylether, Kresylglycidylether, Styroloxid und Phenol(EO)5-glycidylether.

Herstellung des Adduktes (A): Hierzu werden die Epoxidverbindung(en) ($A_1$) und geeignete Polyoxyalkylen-polyole (A2) im Äquivalentverhältnis von (A1) : (A2) = 2: (0,1 bis 1,5), vorzugsweise 2 : (0,3 bis 1), in Gegenwart eines Katalysators, vorzugsweise in einer Schutzgasatmosphäre, unter Rühren auf Temperaturen von 50 - 200 °C, vorzugsweise 100 - 180 °C erwärmt, bis das gewünschte Epoxidäquivalentgewicht, das vorzugsweise zwischen 200 und 4000 g/Eq beträgt und das höher oder niedriger sein kann, als das sich aus dem Äquivalentverhältnis von Hydroxyl-und Epoxygruppen theoretisch zu errechnende, erreicht ist. Die Umsetzung verfolgt man zweckmäßig über die Zunahme des Epoxidäquivalents, das eine Verminderung der Epoxidgruppen anzeigt. Die Reaktion kann durch Kühlung unter die Reaktionstemperatur abgebrochen werden.

Als Katalysatoren für die Herstellung des Adduktes aus ($A_1$) und ($A_2$) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natriumstearat und Lithiumstearat. Ebenfalls geeignet sind starke anorganische und organische Protonsäuren, zum Beispiel Phosphorsäure, Schwefelsäure, Tetrafluorborsäure und Benzolsulfonsäure. Ferner können als Katalysatoren Lewis-Säuren verwendet werden. Als Beispiele seien Zinn(IV)tetrachlorid, Titan(IV)tetrachlorid, Titan(IV)tetraisopropylat, Triethyloxoniumtetrafluoroborat sowie Bortrifluorid und seine Komplexe (zum Beispiel mit Phosphorsäure, Essigsäure (1 : 1 und 1 : 2), Methanol, Diethylether, Tetrahydrofuran, Phenol, Ethylenglykolmonoethylether, Polyethylenglykol (MG 200), Dimethylsulfoxyd, Di-n-Butylether, Di-n-Hexylether, Bernsteinsäure und aliphatischen, cycloaliphatischen, araliphatischen Aminen sowie Stickstoff-Heterocyclen) genannt. Bevorzugt werden als Katalysator $BF_3$-Benzylamin, $BF_3$-Monoethylamin, $BF_3$-Propylamin und $BF_3$-n-Butylamin eingesetzt. Die einzusetzende Menge des Katalysators beträgt vorzugsweise 0,1 bis 3 Gew.-%, bezogen auf die Gesamtmenge der Komponenten ($A_1$) und ($A_2$).

Wie schon erwähnt, kann nach Abschluß der Kondensationsreaktion zwischen ($A_1$) und ($A_2$) das erhaltene, epoxidfunktionelle Addukt noch mit sekundären Aminen ($A_3$) modifiziert werden. Vorzugsweise wird diese Modifizierung bei Temperaturen von 40 bis 80 °C durchgeführt.

Das Addukt (A) wird schließlich zur Erzielung einer besseren Handhabbarkeit vorzugsweise noch mit Wasser auf einen Festkörpergehalt von 98 - 60 Gew.-% verdünnt.

Zunächst wird ein Teil oder die Gesamtmenge der Amine (B) bei einer Temperatur von 20 bis 120 °C, vorzugsweise von 60 bis 100 °C, vorzugsweise unter einer Schutzgasatmosphäre, mit der (den) Epoxidverbindung(en) gemäß (C) umgesetzt. Wird nur ein Teil der Amine (B) umgesetzt, so kann diese Teilmenge aus einem einzelnen Amin oder auch aus mehreren Polyaminen bestehen. Vorzugsweise ist die Teilmenge so bemessen, daß das Äquivalentverhältnis der Epoxygruppen in (C) zu den N-H-Gruppen der Amine (B) mindestens (1 : 2), vorzugsweise mindestens (1 : 3), beträgt. Die Gesamtmenge an Amin (B) wird vorzugsweise so bemessen, daß das Äquivalentverhältnis der Epoxidgruppen in (C) zu den N-H-Gruppen der Amine (B) (0,05 bis 0,5): 1 beträgt. Die Reaktion ist beendet, wenn das Rest-Epoxidäquivalentgewicht des Umsetzungsproduktes von (C) und (B) mindestens 30000 g/Eq. beträgt.

Zur Bestimmung des Rest-Epoxidäquivalentgewichtes wird zweimal an ausreichend großen Proben die Aminzahl des Reaktionsgemisches bestimmt, davon einmal in Gegenwart von Tetra-n-butylammonium bromid (Miterfassung von nicht umgesetzten Epoxidgruppen). Das Rest-Epoxidäquivalentgewicht ergibt sich aus den bestimmten Aminzahlen dann gemäß:

$$\text{Rest-Epoxidäquivalentgewicht} = \frac{56100}{(AZ_{TBAB} - AZ_0)}$$

mit $AZ_{TBAB}$ = Aminzahl, bestimmt in Gegenwart von Tetrabutylammoniumbromid
und $AZ_0$ = Aminzahl bestimmt ohne Tetrabutylammoniumbromid

Die Reaktionszeit beträgt in der Regel 15 bis 240 Minuten. Nach Abschluß der Reaktion kann ggf. eine weitere Teilmenge der Amine (B) zugemischt werden. Anschließend wird, beginnend bei einer Temperatur von 20 bis 70 °C, das Addukt (A) unter Rühren so zudosiert, daß eine Temperatur von 120 °C, vorzugsweise von 90 °C, nicht überschritten wird. Man hält nach Ende der Dosierung bei 50 - 100 °C, vorzugsweise bei 60 - 90 °C, bis das Rest-Epoxidäquivalentgewicht mindestens 30000 g/Eq. beträgt, wofür ca. 15 bis 300 Minuten benötigt werden. Nach Erreichen eines ausreichend hohen Rest-Epoxidäquivalentgewichtes werden ggf. noch Polyamine (B) und/oder Wasser zugemischt.

Die erfindungsgemäßen Härtungsmittel können noch mit Wasser auf einen Feststoffgehalt von 99 - 20 Gew.-% eingestellt werden um die Viskosität der Härter zu reduzieren und ihre Handhabbarkeit zu erleichtern. Entsprechende Mengen Wasser können bereits nach der Herstellung des Adduktes (A) wie auch nach dessen Umsetzung mit den modifizierten Polyaminen (B) zugesetzt werden.

Die erfindungsgemäßen Aminhärter eignen sich in Kombination mit wäßrigen Dispersionen polyfunktioneller Epoxidverbindungen (wäßrigen Epoxidharz-Dispersionen) und/oder wasserverdünnbaren polyfunktionellen Epoxidverbindungen (wasserverdünnbare Epoxidharze) zur Herstellung von Lacken, Grundierungen, Füllern, Beschichtungen, Überzügen, Klebstoffen, Spachtelmassen udgl. sowie zur Modifizierung von Betonen, Mörteln udgl. Geeignete Harz/Härter-Kombinationen können noch die üblichen Zusatzstoffe, wie z. B. Pigmente, Pigmentpasten, Füllstoffe, Antioxidantien, Kon servierungsmittel, Verlaufs-bzw. Verdickungsmittel, Netzmittel, Entschäumer, Reaktivverdünner, Weichmacher, Katalysatoren, Schutzkolloide udgl. enthalten. Sie können ferner noch weitere härtbare Harze enthalten, die die gezielte Einstellung bestimmter technologischer Eigenschaften erlauben. So läßt sich z. B. die Filmhärte durch Mitverwendung von Acrylat-Dispersionen in den Epoxidharz/Aminhärter-Kombinationen steigern.

Geeignete wäßrige oder wasserverdünnbare Epoxidharze bestehen im allgemeinen aus einer oder mehreren epoxidgruppenhaltigen Verbindungen mit im Mittel mindestens einer, vorzugsweise mindestens zwei Epoxidgruppen pro Molekül, welche einen externen (vgl. u. a. US-A 4 122 067 und EP-A 0 081 163) oder einen inneren, statistisch eingebauten (sog. selbstemulgierende Epoxidharze) Emulgator enthalten und somit in einem wäßrigen Medium dispergiert werden können.

Beispiele für derartige Dispersionen epoxidgruppenhaltiger Verbindungen (A) sind in den EP-A-51 483 und 0 491 550 sowie DE-A-36 43751 und 38 20301 und DE-A-4 128 487 beschrieben.

Aufgrund der bereits angesprochenen hervorragenden Eigenschaften, beispielsweise hinsichtlich Haftung, Härte, Korrosionsschutzwirkung, Wasser- und Chemikalienbeständigkeit können mit Kombinationen der erfindungsgemäßen Härter mit geeigneten wäßrigen und/oder wasserverdünnbaren Epoxidharzen und geeigneten Zusatzstoffen sowie ggf. weiteren härtbaren Harzen die verschiedensten anwendungstechnischen Problemstellungen gelöst werden.

Beispielsweise können sie zur Herstellung von Grundierungen und/oder Schutz-und/oder Dekorbeschichtungen auf den unterschiedlichsten, insbesondere rauhen, porösen und/oder feuchten Untergründen wie Holz, mineralischen Substraten, Glas, Kunststoffen (z. B. Polyethylen, Polypropylen, PC, PA, PVC), Kompositwerkstoffen, Keramik sowie vorbehandelten oder nicht vorbehandelten Metallen herangezogen werden.

Aufgrund ihrer günstigen Eigenschaften sind die erfindungsgemäßen Härtungsmittel auch hervorragend für die Formulierung von Einschichtlacken geeignet.

Sie können auch als Bindemittel für textile, organische und/oder anorganische Materialien dienen.

Geeignete Kombinationen können mit Mörtel oder Zement gemischt werden, wobei das Wasser als Emulsion benutzt wird, um den Zement anzuteigen. Umgekehrt kann das Wasser in der Zementmischung als Lösungsmittel für die Epoxidharz-Dispersion benutzt werden. Ein Zusatz der erfindungsgemäßen Härtungsmittel ermöglicht gleichmäßiges Mischen von Zement und Epoxid- harz/-Härter-Dispersionen. So ist es möglich, gehärteten Zement zu erhalten.

Im Falle des Einsatzes der erfindungsgemäßen Aminhärter in Beschichtungsmitteln bzw. in überwiegend wäßrigen Lacken erfolgt die Applikation auf das Substrat nach herkömmlichen Methoden wie beispielsweise Streichen, Spritzen, Tauchen, Aufwalzen udgl. Die Beschichtungen härten bei Raumtemperatur aus. Alternativ können sie durch Erhitzen auf 60 bis 250 °C für eine ausreichend lange Zeit gehärtet werden.

Im Gegensatz zu den in US-A 4 246 148 und US-A 4 608 405 beschriebenen Epoxidharzhärtern sind die erfindungsgemäßen Härtungsmittel von nichtionischem Charakter und ohne weitere Neutralisation wasserverdünnbar, zudem enthalten sie noch primäre Aminogruppen.

Gegenüber den aus EP-A 0 000 605 bekannten Härtern haben die erfindungsgemäßen Härter in Kombination mit wäßrigen Epoxidharzen eine längere Gebrauchsdauer und zeigen in wäßriger Verdünnung weder bei Raumtemperatur noch bei erhöhten Temperaturen Phasenseparation. Gleichzeitig zeigen diese Kombinationen hervorragende technologische Eigenschaften wie z.B. Korrosionsschutz, Härte, Wasser- und Chemikalienbeständigkeit, Haftung usw.

Die Erfindung wird durch die nachstehenden Beispiele weiter beschrieben.

## BEISPIELE

In den nachstehend aufgeführten Beispielen bedeuten:

EV-Wert: Epoxid-Equivalentgewicht, d. h., die Masse eines Harzes oder Reaktionsproduktes, die ein val Epoxygruppen enthält.

HAV-Wert: Amin-Wasserstoff-Äquivalentgewicht, d. h., die Masse eines Amins oder Aminhärters, die ein val N-H-Gruppen enthält.

Die Viskositäten werden nach Ubbelohde bei 25 °C bestimmt.

**1. Herstellung der Polyepoxid/Polyalkylenpolyetherpolyol-Addukte (A)**

1.1. In einem Vierliter-Vierhalskolben, ausgerüstet mit Ankerrührer, Thermometer, Heizeinrichtung und Rückflußkühler erwärmt man die Mischung von 1200 g Polyethylenglykol 1000(2,4 val, mittlere Molmasse 1000 g/Mol) und 1920 g Epikote® 862 (11,2 val, Diglycidylether von Bisphenol F, Fa. Shell Chemie, EV-Wert = 172 g/Eq.) unter Stickstoff und Rühren auf 120 - 130 °C, gibt dann 8 g des Katalysators Anchor 1040 (BF$_3$-Benzylamin-Komplex, Fa. Anchor Chemicals) zu, erwärmt weiter auf 160 - 170 °C und hält bei dieser Temperatur bis ein EV-Wert von 375 g/Eq. erreicht ist. Danach kühlt man auf Raumtemperatur ab und erhält ein gelbliches, mittelviskoses Produkt. Unmittelbar vor der Herstellung der Härter gibt man bei 60 °C unter Schutzgas und Rühren zu 470 g (1,25 val) des Adduktes 12,4 g (0,12 - val) Di-n-Propylamin und hält bei dieser Temperatur bis ein EV-Wert von 427 g/Eq. erreicht ist. Anschließend gibt man noch 25 g deionisiertes Wasser zu und verrührt dieses.

1.2. In einer Versuchsapparatur wie unter 1.1. beschrieben werden 1200 g Polyethylenglykol 1000 (2,4 val) und 1920 g Beckopox® EP 116(10,7 - val, Mischung aus Bisphenol-A-Epoxidharz und Bisphenol-F-Epoxidharz, EV-Wert 180 g/Eq., Hoechst AG) unter Schutzgas bei guter Rührung auf 120 - 130 °C erwärmt und mit 6,5 g Katalysator Anchor 1040 versetzt. Anschließend wird auf 160 - 170 °C erwärmt und bei dieser Temperatur gehalten bis das Addukt einen EV-Wert von 417 g/Eq. aufweist. Danach kühlt man auf Raumtemperatur ab. Unmittelbar vor der Herstellung der erfindungsgemäßen Härtungsmittel gibt man bei 55 °C zu 238 g (0,57 val) des Adduktes unter Schutzgas 6,3 g (0,062 val) Di-n-Propyla min und rührt bei dieser Temperatur bis das Produkt einen EV-Wert von 482 g/Eq. aufweist. Danach werden 13 g deionisiertes Wasser zugegeben und verrührt.

1.3. In einem Ein-Liter-Vierhalskolben, ausgerüstet wie unter 1.2. beschrieben, erwärmt man 300 g (0,6 val) Polyethylenglykol 1000, 432 g (2,4 val) Beckopox® EP 116 und 90 g (0,27 val) eines Diglycidylethers auf Basis von propoxyliertem Bisphenol A (EV-Wert 337 g/Eq., Fa. Dow Deutschland GmbH) unter Stickstoff bei guter Rührung auf 125 °C. Bei dieser Temperatur fügt man 1,4 g des Katalysators Anchor 1040 zu und erwärmt auf 160 °C. Die Temperatur wird gehalten bis ein EV-Wert von 458 g/Eq. erreicht ist, anschließend kühlt man auf Raumtemperatur ab. Wie unter 1.1. und 1.2. beschrieben gibt man zur Herstellung der erfindungsgemäßen Härtungsmittel zu 222 g (0,48 val) des erhaltenen Reaktionsproduktes bei 55 °C unter Stickstoff 5,5 g (0,058 val) Di-n-Propylamin, rührt bis ein EV-Wert von 530 g/Eq. erreicht ist, gibt 12,5 g deionisiertes Wasser zu und verrührt.

1.4. Analog der in 1.3. beschriebenen Adduktherstellung werden 300 g Polyethylenglykol 1000 (0,6 val), 384 g Beckopox® EP 116 (2,1 val), 93 g (0,53 val) Eurepox® RV-C (Diglycidylether von Cyclohexandimethanol, EV-Wert = 174 g/Eq., Fa. Witco) unter Stickstoff auf einen EVWert von 413 g/Eq. kondensiert. Vor der Herstellung aminischer Härtungsmittel werden 200 g (0,48 val) dieses Adduktes bei 55 °C unter Stickstoff mit 5,3 g (0,052 val) Di-n-Propylamin umgesetzt und anschließend noch 11 g deionisiertes Wasser zugesetzt. EV-Wert des Produktes 475 g/Eq.

**2. Herstellung der erfindungsgemäßen Härtungsmittel**

2.1 In einem Ein-Liter-Vierhalskolben mit Rührer, Thermometer, Rückflußkühler und Tropftrichter legt man unter Stickstoff 37,9 g (0,89 val) Isophorondiamin vor und tropft unter Rühren 30,9 g (0,23 val) Epodil® 741 E (n-Butylglycidylether, EV-Wert = 137 g/Eq., Fa. Anchor Chemicals) zu.Nach Ende der Zugabe erwärmt man auf 80 - 90 °C, hält ca. 90 min bei dieser Temperatur, kühlt anschließend auf 50 - 60 °C ab, gibt 60,5 g (1,78 val) meta-Xylylendiamin zu und verrührt dieses 30 min. Danach werden zu dem gut gerührten Amingemisch 201,0 g (0,45 val) des Adduktes 1.1. so zugegeben, daß eine Temperatur von 70 - 90 °C eingehalten wird. Nach Ende der Zugabe hält man noch zwei Stunden bei dieser Temperatur, gibt dann 72,0 g deionisiertes Wasser zu und verrührt gut. Der resultierende Härter wies eine Viskosität von 26900 mPa.s auf und hatte einen HAV-Wert von 200 g/Eq. in der Lieferform.

2.2. In einer Apparatur analog der unter 2.1. beschriebenen werden zu 42,4 g (1,00 val) Isophorondiamin unter Stickstoff 34,6 g (0,25 val) Epodil® 741 E zugetropft. Nach Ende der Zugabe erwärmt man auf 80 - 90 °C, hält ca. 90 min bei dieser Temperatur, kühlt anschließend auf Raumtemperatur ab, gibt 30,5 g (0,90 val) meta-Xylylendiamin und 42,4 g (1 val) Isophorondiamin zu und verrührt das Amingemisch 30 min. Danach werden unter guter Rührung 179 g (0,35 val) des Adduktes 1.2. so zugegeben, daß die Temperatur des Reaktionsgemisches zwischen 70 und 90 °C liegt. Nach beendeter Zugabe hält man noch 2 Stunden bei 80 °C, gibt dann 72,0 g Wasser zu und verrührt gut. Viskosität des Produktes 17000 mPa.s, HAV-Wert 175 g/Eq.

2.3. Es wird die gleiche Apparatur wie unter 2.1. beschrieben verwendet. Zu 42,6 g (1,00 val) Isophorondiamin tropft man unter Stickstoff und Rührung 34,4 g (0,25 val) Epodil 741 E und erwärmt anschließend für 90 min auf 80 - 90 °C. Nach Abkühlung auf 50 - 60 °C gibt man 179,0 g (0,37 val) des Adduktes 1.2. so zu, daß die Temperatur des Reaktionsgemisches 60 - 80 °C beträgt und hält anschließend noch 90 min bei dieser Temperatur. Danach werden 30,5 g (0,89 val) metaXylylendiamin und 42,4 g (1,00 val) Isophorondiamin zugegeben und 90 min verrührt. Schließlich werden noch 471 g Wasser eingerührt. Der Härter wies eine Viskosität von 1700 mPa.s und einen HAV-Wert von 350 g/Eq. auf.

2.4. In der üblichen Apparatur werden 37,0 g (0,87 val) Isophorondiamin vorgelegt. Unter Stickstoff und guter Rührung werden 35,0 g (0,22 val) Grilonit® RV 1812 (Diglycidylether von 1,6-Hexandiol, Fa. Ems Chemie, EV-Wert = 159 g/Eq.) zugetropft. Nach beendeter Zugabe wird für 90 min auf 70 - 80 °C erwärmt, anschließend auf Raumtemperatur abgekühlt und 28,4 g (0,83 val) meta-Xylylendiamin sowie 39,4 g (0,93 val) Isophorondiamin zugegeben. Zu diesem Gemisch werden bei 60 - 70 °C 190,0 g (0,42 val) des Adduktes 1.1. gegeben und anschließend 60 min bei 70 - 80 °C gehalten. Nach Abkühlen auf Raumtemperatur wird mit 72 g Wasser verdünnt. Viskosität des Härters 60000 mPa.s, HAV-Wert 200 g/Eq.

2.5. Analog 2.4. werden 43,6 g (1,03 val) Isophorondiamin vorgelegt zu denen unter Stickstoff bei guter Rührung 47,4 g (0,26 val) DOW D.E.R. 736 (Diglycidylether von Polypropylenglykol, n = 4, Fa. Dow Chemical Deutschland GmbH, EV-Wert = 185 g/Eq.) langsam zugegeben werden. Nach Ende der Zugabe erwärmt man 90 min auf 70 - 80 °C, anschließend werden bei Raumtemperatur 79,0 g (1,86 val) Isophorondiamin zugegeben. Zu diesem Gemisch werden bei 60 - 70 °C 158,0 g (0,35 val) des Adduktes 1.1. so zudosiert, daß die Temperatur des Reaktionsgemisches 90 °C nicht übersteigt. Nach Abschluß der Zugabe hält man 60 min bei 70 - 80 °C. nach Abkühlen auf Raumtemperatur wird mit 74,0 g deionisiertem Wasser verdünnt. Viskosität des Härters 50000 mPa.s, HAV-Wert 175 g/Eq.

2.6. Analog 2.4. werden 85,0 g (2,00 val) Isophorondiamin vorgelegt und unter Stickstoff und guter Rührung mit 34,4 g (0,27 val) Epodil® 741 E umgesetzt. Nach Ende der Zugabe hält man 90 min bei 70 - 80 °C, nach Abkühlung auf 40 - 50 °C dosiert man 179,0 g (0,35 val) des Adduktes 1.2. so zu, daß dabei eine Temperatur von 90 °C nicht überschritten wird. Nach Beendigung der Zudosierung hält man 90 min bei 70 - 80 °C und gibt anschließend bei Raumtemperatur noch 30,5 g (0,90 val) meta-Xylylendiamin und 72 g deionisiertes Wasser zu. Viskosität des Härters 50000 mPa.s, HAV-Wert 175 g/Eq.

2.7. In der üblichen Apparatur werden 85,0 g (2,00 val) Isophorondiamin vorgelegt, dazu gibt man langsam unter Stickstoff und Rühren 34,0 g (0,25 val) Epodil® 741 E und erwärmt anschließend für 90 min auf 70 - 80 °C. Man kühlt auf 40 - 50 °C ab und dosiert 192,5 g (0,39 val) des Adduktes 1.4. so zu, daß eine Temperatur von 90 °C nicht überschritten wird. Nach Ende der Zudosierung hält man 60 min bei 70 - 80 °C, läßt dann abkühlen und gibt dann 30,5 g (0,90 val) meta-Xylylendiamin sowie 75 g deionisiertes Wasser zu und verrührt gut. Viskosität 44000 mPa.s, HAV-Wert 184 g/Eq.

2.8. Analog dem in 2.7. beschriebenen Beispiel wird zu dem Umsetzungsprodukt aus 85,0 g (2,00 val) Isophorondiamin und 34,0 g (0,25 val) Epodil 741 E 182,0 g (0,32 val) des Adduktes 1.3. zudosiert. Nach Abschluß der Haltezeit und Abkühlen werden noch 30,5 g (0,90 val) meta-Xylylendiamin und 74,0 g deionisiertes Wasser zugegeben und sorgfältig verrührt. Viskosität des Endproduktes 27500 mPa.s, HAV-Wert 175 g/Eq.

2.9. In der üblichen Apparatur werden unter Stickstoff und bei guter Rührung zu 42,5 g (1,00 val) Isophorondiamin 34,5 g (0,25 val) Epodil® 741 E getropft. Man erwärmt anschließend auf 70 - 80 °C und hält für 90 min diese Temperatur. Anschließend kühlt man ab und gibt 42,5 g (1,00 val) Isophorondiamin sowie 30,5 g (0,90 val) meta-Xylylendiamin zu. Nachdem diese gut verrührt worden sind, gibt man, beginnend bei ca. 50 °C, 179,0 g (0,36 val) des Adduktes 1.4. so zu, daß die Temperatur des Reaktionsgemisches 90 °C nicht übersteigt. Nach der Zudosierung hält man 60 min bei 70 80 °C. Danach kühlt man ab und gibt noch 73,0 g deionisiertes Wasser zu. Der Härter weist eine Viskosität von 10400 mPa.s und einen HAV-Wert von 175 g/Eq auf.

2.10. In einer Apparatur wie in Beispiel 2.1. beschrieben werden unter Stickstoff 85,0 g (2,00 val) Isophorondiamin und 30,5 g (0,90 val) meta-Xylylendiamin vorgelegt. Bei einer Temperatur von 60 °C werden unter Rühren 179,0 g (0,35 val) des Adduktes 1.2. so zugegeben, daß eine Temperatur von 80 °C nicht überschritten wird. Anschließend hält man 150 min bei 70 - 80 °C. Danach werden bei 70 °C 34,4 g (0,25 val) Epodil® 741 E zugegeben und 60 min bei 70 - 80 °C verrührt. Schließlich kühlt man ab und mischt noch 72,0 g deionisiertes Wasser zu. Viskosität des Härters 60000 mPa.s, HAV-Wert 175 g/Eq.

Einige Eigenschaften der in den Beispielen angeführten erfindungsgemäßen Härtungsmittel sind in Tabelle 1 zusammengefaßt.

Tabelle 1

| Eigenschaften der erfindungsgemäßen Härtungsmittel | | | | | |
|---|---|---|---|---|---|
| Beispiel Nr. | verwendetes Addukt | Festkörper [%] | Viskosität (Ubbelohde) [mPa*s] | H-Äquivalent-Gewicht (HAV-Wert) [g/Eq.] | Stabilität in 20%iger wäßriger Verdünnung bei 40°C |
| 2.1. | 1.1. | 80,0 | 26.900 | 200 | ca. 5 Stunden |
| 2.2. | 1.2. | 80,0 | 17.000 | 175 | ca. 2 Tage |
| 2.3. | 1.2. | 40,0 | 1.700 | 350 | > 14 Tage |
| 2.4. | 1.1. | 80,0 | 65.000 | 200 | > 7 Tage |
| 2.5. | 1.1. | 80,0 | 50.000 | 175 | > 4 Stunden |
| 2.6. | 1.2. | 80,0 | 50.000 | 175 | > 5 Tage |
| 2.7. | 1.4. | 80,0 | 44.000 | 184 | > 5 Tage |
| 2.8. | 1.3. | 80,0 | 27.500 | 175 | ca. 5 Stunden |
| 2.9. | 1.4. | 80,0 | 10.400 | 175 | > 2 Tage |
| 2.10. | 1.2. | 80,0 | 60.000 | 175 | > 5 Tage |
| BECKOPOX EH 623 (Härter gem. EP 0 000 605) | --- | 80,0 | 11.000 | 200 | < 0,5 Stunden |

3. Anwendungstechnische Prüfungen

Erfindungsgemäße Härtungsmittel (Beispiele 2.1., 2.2., 2.3., 2.6., 2.7. und 2.9.) sowie die Aminhärter BECKOPOX® EH 623 w (nach EP 605) und Beckopox VEH 2133 w (Hoechst AG) werden anwendungstechnischen Prüfungen unterzogen, deren Ergebnisse in Tabelle 2 zusammengestellt sind.

Tabelle 3 zeigt die Ergebnisse der Korrosionsschutzprüfung der Härter 2.2. und 2.3. gegenüber BECKOPOX-Spezialhärter EH 623 w.

Erläuterung der Prüfungsbedingungen:

a) Gebrauchsdauer: Nach dem Mischen von Härter und Dispersion werden halbstündlich Filme mit einer Naßfilmdicke von 200 μm aufgezogen. Das Auftreten einer Trübung im Film nach Aushärtung zeigt das Ende der Verarbeitungszeit an und wird als Prüfergebnis festgehalten.

b) Staubtrocken: Auf den Film gestreute Glasperlen lassen sich nach der Aushärtung nicht mehr mit einem Pinsel entfernen.

c) Klebfrei: Die Glasperlen lassen sich nach der Aushärtung mit einem Pinsel entfernen.

d) Verlauf: Nach dem Mischen von Härter und Dispersion werden Filme mit einer Naßfilmdicke von 200 μm aufgezogen. Nach Trocknung wird der Filmverlauf bewertet.
Die Bewertung reicht von 0 = sehr guter, störungsfreier Verlauf bis 5 = kein Verlauf, starke Filmstörungen (DIN 53 230).

e) Filmtrübung: Nach dem Mischen von Härter und Dispersion werden Filme mit einer Naßfilmdicke von 200 μm

aufgezogen. Nach Trocknung und Härtung werden die Filme hinsichtlich Trübung bewertet. Die Bewertungsskala reicht von 0 = klarer Film bis 5 = völlig trüber, undurchsichtiger Film.

f) Pendelhärte nach König: DIN 53 157.

g) Wasserbeständigkeit (nach 24 h, Lagerung bei Raumtemperatur): Auf Glasplatten mit 200 µm Naßfilmdicke aufgezogene Filme werden nach 24 h Lagerung in Wasser bei Raumtemperatur geprüft. Die Bewertungsskala reicht von 1 = sehr gut bis 5 = schlecht.

h) Erichsentiefung (Bestimmung der Elastizität nach DIN ISO 1520): Pigmentierte Lacke werden auf dekapitiertem Eisenblech gespritzt, so daß eine Trockenfilmdicke von ca. 50 bis 60 µm resultiert. Die beschichteten Bleche werden nach 7 und 14 Tagen sowie nach 4 Wochen Trocknung im Tiefungsprüfgerät nach Erichsen untersucht. Die Tiefung wird abgebrochen, wenn die Lackoberfläche den ersten Riß zeigt oder der Film sich vom Untergrund ablöst. Der Tiefungswert wird in mm angegeben.

i) Salzsprühtest 500 h: DIN 53 167

k) Tropentest 500 h: DIN 50 017

## Tabelle 2.  Anwendungstechnische Eigenschaften der erfindungsgemäßen Härtungsmittel

| Härtungsmittel | BECKOPOX (R) EH 623 w | BECKOPOX (R) VEH 2133 w | Bsp. 2.1. | Bsp. 2.2. | Bsp. 2.3. | Bsp. 2.6. | Bsp. 2.7. | Bsp. 2.9. |
|---|---|---|---|---|---|---|---|---|
| Menge Härter [G.-Teile] | 21,7 | 16,2 | 21,7 | 21,7 | 38,0 | 19,0 | 20,2 | 14,3 |
| Menge Epoxid-harz-Dispersion [G.-Teile] *) | 100,0 | 100,0 | 100,0 | 100,0 | 100,0 | 100,0 | 100,0 | 80,6 |
| deion. Wasser [G.-Teile] | 21,7 | 13,8 | 21,7 | 21,7 | 0,0 | 19,0 | 20,2 | 14,2 |
| Gebrauchdauer | 150 min | 90 min | 195 min | 180 min | 185 min | 255 min | 240 min | 180 min |
| staubtrocken | 30 min | 25 min | 45 min | 35 min | 25 min | 25 min | 40 min | 20 min |
| klebfrei | 6 h | 4 h 30 min | 8 h | 5 h | 5 h 45 min | 6 h | 8 h | 2 h 30 min |
| Verlauf | 0 - 1 | 0 - 1 | 0 | 0 - 1 | 1 | 0 - 1 | 0 - 1 | 0 |
| Filmtrübung | 0 | 0 | 0 - 1 | 0 | 0 | 0 | 0 | 0 - 1 |
| Pendelhärte nach 1 d nach 2 d nach 7 d | 30 s 75 s 131 s | 40 s 81 s 148 s | 44 s 94 s 132 s | 99 s 123 s 168 s | 75 s 114 s 160 s | 35 s 77 s 181 s | 41 s 96 s 143 s | 69 s 82 s 144 s |
| Wasserbe-ständigkeit | 3 | 2 - 3 | 2 | 1 - 2 | 2 | 3 | 2 | 2 |

*) Als Epoxidharz-Dispersion wurde das Produkt BECKOPOX(R) VEP 2385 (Hoechst AG) verwendet.

EP 0 610 787 B1

Tabelle 3

| Korrosionsschutz-Eigenschaften der erfindungsgemäßen Härtungsmittel | | | | |
|---|---|---|---|---|
| Härtungsmittel | BECKOPOX(R) EH 623w | BECKOPOX(R) VEH 2133w | Bsp. 2.2. **) | Bsp. 2.3. **) |
| Pendelhärte | | | | |
| nach 7 d | 78 | 80 | 69 | 77 |
| nach 30 min/80 °C | 91 | 93 | 81 | 90 |
| Erichsentiefung | | | | |
| Schichtst. [µm] | 63 | 61 | 58 | 60 |
| nach 1 Wo. | 6,3 mm | 6,1 mm | 6,7 mm | 6,6 mm |
| nach 2 Wo. | 6,8 mm | 5,7 mm | 6,5 mm | 6,3 mm |
| nach 5 Wo. | 4,1 mm | 4,4 mm | 6,4 mm | 5,9 mm |
| Salzsprühtest 500 h | | | | |
| Schichtst. [µm] | 58 | 58 | 57 | 59 |
| Blasengrad Fl. | m1g1 | m1g1 | m1g1 | m0g0 |
| Haftverlustzone | 13 - 14 mm | 11 - 12 mm | 10 mm | 12 - 14 mm |
| Rostzone | 10 mm | 9 mm | 8 mm | 9 mm |
| Tropentest 500 h | | | | |
| Schichtst. [µm] | 61 | 61 | 62 | 64 |
| Blasengrad | m1g1 | m1g1 | m1g0 | m0g0 |
| Haftung 2 h nach Belastung | 5 | 4 | 3 | 3 |
| Haftung 24 h nach Belastung | 4 | 3 | 1 | 0 |
| Flächenrost | 0 - 1 | 0 | 0 | 0 |

**) Mischungsverhältnisse Härtungsmittel/Harz wie in Tabelle 2 angegeben. Als Epoxidharz-Dispersion wurde das Produkt BECKOPOX(R) VEP 2385 (Hoechst AG) verwendet.

**Patentansprüche**

1. Härtungsmittel für wäßrige Epoxidharz-Dispersionen, erhalten durch Umsetzung eines Adduktes (A) aus mindestens einem Polyepoxid ($A_1$) und mindestens einem Polyalkylenpolyetherpolyol ($A_2$), wobei das Addukt (A) gegebenenfalls mit einem sekundären Amin ($A_3$) modifiziert sein kann, mit einem Umsetzungsprodukt aus einem Amin (B) und einem Epoxid (C), wobei die Menge an Amin (B) so gewählt ist, daß die am Stickstoff befindlichen H-Atome in einem 2- bis 10-fachen Überschuß, bezogen auf die Epoxidgruppen in (A), vorhanden sind, und wobei die Härtungsmittel primäre Aminogruppen enthalten.

2. Härtungsmittel nach Anspruch 1, dadurch gekennzeichnet, daß als Epoxidverbindungen (C) aliphatische und/oder cycloaliphatische Mono- oder Diepoxide und/oder aromatische Monoepoxide im Äquivalentverhältnis von reaktiven Epoxidgruppen in (C) zu N-H-Gruppen in (B) von (0,05 - 0,5) : 1 eingesetzt werden.

3. Härtungsmittel nach Anspruch 1 oder 2, dadurch gekennzeichnet, daß als Epoxidverbindungen (C) n-Butylglycidylether, 2-Ethylhexylglycidylether, Cyclohexandimethanoldiglycidylether und/oder Polypropylenglykoldiglycidylether (n = 2 - 12) eingesetzt werden.

4. Härtungsmittel nach einem oder mehreren der Ansprüche 1 bis 3, dadurch gekennzeichnet, daß die Komponente

(A$_1$) eine wasserunlösliche Polyepoxidverbindung, vorzugsweise der Diglycidylether von Bisphenol A, Bisphenol F, Cyclohexandimethanol und/oder von Umsetzungsprodukten des Bisphenols A mit Propylenoxid ist und die Komponente (A$_2$) ein wasserlösliches Polyoxyalkylenglykol, vorzugsweise Polyethylenglykol, ist.

5. Härtungsmittel nach einem oder mehreren der Ansprüche 1 bis 4, dadurch gekennzeichnet, daß ein (cyclo)aliphatisches oder araliphatisches, sekundäres Amin als sekundäres Amin (A$_3$) in einer Menge von bis zu 0,5 Äquivalenten, vorzugsweise von 0,02 bis 0,25 Äquivalenten, bezogen auf die in dem Addukt aus (A$_1$) und (A$_2$) enthaltenen Epoxidgruppen eingesetzt wird.

6. Härtungsmittel nach einem oder mehreren der Ansprüche 1 bis 5, dadurch gekennzeichnet, daß als Polyamin (B) aliphatische, cycloaliphatische, araliphatische und/oder heterocyclische Amine allein oder im Gemisch handelt, und vorzugsweise Isophorondiamin, Cyclohexandiamin, TCD-Diamin und meta-Xylylendiamin genommen werden.

7. Härtungsmittel nach einem oder mehreren der Ansprüche 1 bis 6, dadurch gekennzeichnet, daß die Härtungsmittel mit Wasser auf einen Feststoffgehalt von 99 - 20 Gew.-% eingestellt werden.

8. Verwendung der Härtungsmittel nach einem oder mehreren der Ansprüche 1 bis 7 in Kombination mit wäßrigen Epoxidharz-Dispersionen und/oder wasserverdünnbaren Polyepoxidverbindungen und Wasser sowie ggf. üblichen Lackadditiven und/oder weiteren härtbaren Harzen zur Herstellung von Lacken, Überzügen, Grundierungen, Füllern, Beschichtungen, Klebstoffen, Spachtelmassen udgl. sowie zur Modifizierung von Betonen und Mörteln.

9. Verwendung der Harz/Härter-Kombinationen gemäß Anspruch 8 zur Beschichtung von Holz, Kunststoffen, mineralischen Substraten, Kompositwerkstoffen, Keramik sowie vorbehandelten und nicht vorbehandelten Metallen sowie als Bindemittel für textile, organische und/oder anorganische Materialien.

## Claims

1. A curing agent for aqueous epoxy resin dispersions obtained by reaction of an adduct (A) of at least one polyepoxide (A$_1$) and at least one polyalkylene polyether polyol (A$_2$), it being possible for the adduct (A) to be modified with a secondary amine (A$_3$) if appropriate, with a reaction product of an amine (B) and an epoxide (C), the amount of amine (B) being chosen such that the H atoms on the nitrogen are present in a 2- to 10-fold excess, based on the epoxide groups in (A), and the curing agent containing primary amino groups.

2. A curing agent as claimed in claim 1, wherein the epoxide compounds (C) employed are aliphatic and/or cycloaliphatic mono- or diepoxides and/or aromatic monoepoxides in an equivalent ratio of reactive epoxide groups in (C) to N-H groups in (B) of (0.05 - 0.5) : 1.

3. A curing agent as claimed in claim 1 or 2, wherein the epoxide compounds (C) employed are n-butyl glycidyl ether, 2-ethylhexyl glycidyl ether, cyclohexanedimethanol diglycidyl ether and/or polypropylene glycol diglycidyl ether (n = 2-12).

4. A curing agent as claimed in one or more of claims 1 to 3, wherein component (A$_1$) is a water-insoluble polyepoxide compound, preferably the diglycidyl ether of bisphenol A, bisphenol F, cyclohexanedimethanol and/or of a reaction product of bisphenol A with propylene oxide, and component (A$_2$) is a water-soluble polyoxyalkylene glycol, preferably polyethylene glycol.

5. A curing agent as claimed in one or more of claims 1 to 4, wherein a (cyclo)aliphatic or araliphatic, secondary amine is employed as the secondary amine (A$_3$) in an amount of up to 0.5 equivalent, preferably 0.02 to 0.25 equivalent, based on the epoxide groups contained in the adduct of (A$_1$) and (A$_2$).

6. A curing agent as claimed in one or more of claims 1 to 5, wherein the polyamine (B) is aliphatic, cycloaliphatic, araliphatic and/or heterocyclic amines, by themselves or as a mixture, and preferably isophoronediamine, cyclohexanediamine, TCD-diamine and meta-xylylenediamine.

7. A curing agent as claimed in one or more of claims 1 to 6, wherein the curing agent is brought to a solids content of 99 - 20% by weight with water.

8. The use of a curing agent as claimed in one or more of claims 1 to 7, in combination with an aqueous epoxy resin dispersion and/or water-dilutable polyepoxide compound and water and if appropriate customary paint additives and/or other curable resins, for the preparation of paints, coverings, primers, fillers, coatings, adhesives, troweling compositions and the like and for modifying concretes and mortars.

9. The use of a resin/hardener combination as claimed in claim 8 for coating wood, plastics, mineral substrates, composite materials, ceramics and pretreated and unpretreated metals and as a binder for textile, organic and/or inorganic materials.

**Revendications**

1. Agents durcisseurs pour des dispersions aqueuses de résines époxydes, obtenus par transformation d'un adduit (A) à partir d'au moins un polyépoxyde ($A_1$) et d'au moins un polyalkylène-polyétherpolyol ($A_2$), l'adduit (A) pouvant éventuellement être modifié par une amine secondaire ($A_3$), un produit de réaction d'une amine (B) et d'un époxyde (C), la quantité d'amine (B) étant choisie de façon telle que les atomes d'hydrogène se trouvant sur l'atome d'azote soient présents dans un excès de 2 à 10 fois, par rapport aux groupes époxydes contenus dans (A), et les agents durcisseurs présentant des groupes amino primaire.

2. Agents durcisseurs selon la revendication 1, caractérisés en ce qu'on emploie en tant que composés époxydes (C) des mono- ou diépoxydes aliphatiques et/ou cycloaliphatiques et/ou des monoépoxydes aromatiques dans un rapport d'équivalents de groupes époxyde réactifs contenus dans (C) aux groupes N-H dans (B) de (0,05 à 0,5) : 1.

3. Agents durcisseurs selon la revendication 1 ou 2, caractérisés en ce qu'on emploie en tant que composés époxydes (C) l'éther n-butylglycidylique, l'éther 2-éthylhexylglycidylique, l'éther cyclohexane diméthanoldiglycidylique, et/ou l'éther diglycidylique du polypropyléneglycol (n = 2-12).

4. Agents durcisseurs selon une ou plusieurs des revendications 1 à 3, caractérisés en ce que le constituant ($A_1$) est un composé polyépoxyde insoluble dans l'eau, de préférence l'éther diglycidylique du bisphénol A, du bisphénol F, du cyclohexane diméthanol et/ou des produits de réaction du bisphénol A avec l'oxyde de propylène et le constituant ($A_2$) est un polyoxyalkylène glycol hydrosoluble, de préférence le polyéthylène glycol.

5. Agents durcisseurs selon une ou plusieurs des revendications 1 à 4, caractérisés en ce qu'on emploie une amine secondaire (cyclo)aliphatique ou araliphatique en tant qu'amine secondaire ($A_3$) en une quantité allant jusqu'à 0,5 équivalent, de préférence de 0,02 à 0,25 équivalent, par rapport à la teneur en groupes époxyde présentée par l'adduit de ($A_1$) et de ($A_2$).

6. Agents durcisseurs selon une ou plusieurs des revendications 1 à 5, caractérisés en ce que, en tant que polyamine (B), il s'agit des amines aliphatiques, cycloaliphatiques, araliphatiques et/ou hétérocycliques, seules ou en mélange, et on emploie de préférence l'isophorone diamine, la cyclohexane diamine, la TCD-diamine et la méta-xylylène diamine.

7. Agents durcisseurs selon une ou plusieurs des revendications 1 à 6, caractérisés en ce qu'on établit dans les agents durcisseurs à l'aide de l'eau une teneur en extrait sec de 99 à 20% massiques.

8. Utilisation des agents durcisseurs selon une ou plusieurs des revendications 1 à 7 en combinaison avec des dispersions aqueuses de résines époxydes et/ou des composés époxydes diluables à l'eau et l'eau, ainsi qu'éventuellement des additifs de vernis usuels et/ou d'autres résines durcissables pour la préparation de vernis, de revêtements, de couches de fond, de charges, d'enduit, d'adhésifs, de mastics etc., ainsi que pour la modification de bétons et de mortiers.

9. Utilisation des combinaisons résine/durcisseur selon la revendication 8 pour le revêtement de bois, de matières plastiques, de substrats minéraux, de matériaux composites, de céramique ainsi que de métaux prétraités et non prétraités, ainsi que de liants pour l'industrie textile, des matières organiques et/ou inorganiques.